# EUROPÄISCHE PATENTSCHRIFT

(11) **EP 1 278 785 B1**
(45) Veröffentlichungstag und Bekanntmachung des Hinweises auf die Patenterteilung: **21.07.2004**
(21) Anmeldenummer: 01943300.2
(22) Anmeldetag: 30.04.2001
(51) Int. Cl.: C08F 10/02, C08F 2/00, C08F 4/28, B01J 8/06, B01J 19/24

(54) **VERFAHREN ZUR KONTINUIERLICHEN HERSTELLUNG VON ETHYLENHOMO- UND ETHYLENCOPOLYMEREN**
METHOD FOR THE CONTINUOUS PRODUCTION OF ETHYLENE HOMO- AND ETHYLENE CO-POLYMERS
PROCEDE DE PRODUCTION CONTINUE D'HOMOPOLYMERES ET DE COPOLYMERES D'ETHYLENE

(30) Priorität: 05.05.2000 DE 10021886
(43) Veröffentlichungstag der Anmeldung: 29.01.2003
(73) Patentinhaber: Basell Polyolefine GmbH, 50389 Wesseling (DE)
(72) Erfinder: MÄHLING, Frank-Olaf, 68167 Mannheim (DE); LITTMANN, Dieter, 35325 Mücke (DE); DAISS, Andreas, 68165 Mannheim (DE)
(86) Internationale Anmeldenummer: PCT/EP2001/004839
(87) Internationale Veröffentlichungsnummer: WO 2001/085807

(56) Entgegenhaltungen:
- EP-A- 0 082 502
- DD-A- 137 591
- DE-A- 2 164 017
- DE-A- 4 102 808
- DE-A- 19 754 039
- US-A- 4 175 169

## Beschreibung

Die vorliegende Erfindung betrifft ein Verfahren zur kontinuierlichen Herstellung von Ethylenhomo- und Ethylencopolymeren in Gegenwart von radikalischen Polymerisationsinitiatoren und gegebenenfalls Molekulargewichtsreglern in einem Rohrreaktor mit Heißwassermantel und ein oder mehreren Reaktionszonen bei Drücken im Bereich von 1000 bis 4000 bar und Temperaturen von 120°C bis 350°C, wobei der Heißwassermantel jeder Reaktionszone in mindestens zwei unabhängig regelbare, getrennte Längsabschnitte geteilt ist.

Die Ethylenhomopolymerisation und -copolymerisation nach dem Hochdruckmasseverfahren ist allgemein bekannt. Die verwendeten Reaktoren werden meist kontinuierlich bei Drücken von 150 bis 350 MPa und bei Temperaturen von 150°C bis 350°C mit mittleren Verweilzeiten von 30 bis 120 Sekunden betrieben (Ullmann's Encyclopädie der technischen Chemie, 4. Auflage, Bd. 19/1980/S.169-178).

Die Qualität und der erzielte Umsatz der erzeugten Polymeren werden dabei weitgehend von der Temperaturführung im Reaktor bestimmt, wobei der erzielbare Umsatz proportional der abgeführten Wärmemenge ist. Ein Teil der bei der Polymerisation entstehenden Wärmemenge wird dabei über die Reaktorwände abgeführt und kann dort z.B. an ein Kühlmedium abgegeben werden. Ein häufig auftretendes Problem ist, daß sich selbst bei hohen Temperaturen und hohen Drücken an den gekühlten Reaktorinnenwänden hochmolekulare Polymerbeläge absetzen. Da Polyethylen ein schlechter Wärmeleiter ist, wird dadurch der Wärmedurchgang drastisch verringert. Bei ungenügender Wärmeabfuhr kann sich aber das Ethylen als Folge der Temperaturerhöhung explosionsartig zersetzen. Um derartige Polymerablagerungen zu vermeiden wurden verschiedenste Reaktorfahrweisen entwickelt.

DE 4102808-A beschreibt die Temperaturführung in einem Hochdruckmehrzonenreaktor, wobei die Temperatur des unmittelbar vor der Peroxid-Dosierstelle aus dem Mantel austretenden Heißwassers so kontrolliert wird, daß die Temperaturdifferenz zwischen Dosierstelle und einer zweiten Temperaturmeßstelle zwischen 8 bis 30°C beträgt. Die Heißwasseraustrittstemperatur beträgt zwischen 207°C bis 225°C.

In DD 146 298 wird Polyethylen mit verbesserten Eigenschaften durch eine spezielle Temperaturführung des Kühlwasserkreislaufs erhalten. Der in den Kühlmantel eingespeiste Wärmeträger wird entlang des Reaktors auf Temperaturen zwischen 215°C bis 235°C eingestellt. Die Temperatur des Wärmeträgers darf gleichzeitig nicht mehr als 70°C bis 95°C unter der Maximaltemperatur des Reaktionsgemisches in der jeweiligen Reaktionszone liegen.

Ein weiteres spezielles Temperaturprofil zur Optimierung der Polymerqualität wird in DD 137 591 beschrieben. Die Temperaturdifferenz zwischen Reaktorinnenwand und Reaktorkernstrom wird hier in einem definierten Bereich gehalten, wobei diese Temperaturdifferenz innerhalb einer Reaktionszone jeweils von der Dosierstelle des Initiators bis zum Temperaturmaximum kleiner als die zwischen Temperaturmaximum und Ort der erneuten Zuspeisung des Monomeren ist. Das Patent lehrt außerdem, daß diese Temperaturdifferenz besonders in der ersten Reaktionszone bis zum ersten Temperaturmaximum besonders klein gehalten werden sollte. Das verwendete Kühlwasser hat dabei Temperaturen zwischen 237°C und 247°C.

Die obigen Verfahren sind alle relativ aufwendig. Es bestand daher die Aufgabe, eine gute Balance zwischen Umsatz und Produktqualität mit einer einfachen Temperaturführung des Kühlmediums zu erreichen.

Demgemäß wurde ein Verfahren zur kontinuierlichen Herstellung von Ethylenhomo- und Ethylencopolymeren in Gegenwart von radikalischen Polymerisationsinitiatoren und gegebenenfalls Molekulargewichtsreglern in einem Rohrreaktor mit Heißwassermantel und ein oder mehreren Reaktionszonen bei Drücken im Bereich von 1000 bis 4000 bar und Temperaturen von 120°C bis 350°C, wobei der Heißwassermantel jeder Reaktionszone in mindestens zwei unabhängig regelbare, getrennte Längsabschnitte geteilt ist, gefunden, welches dadurch gekennzeichnet ist, daß die Heißwasserausgangstemperatur aus dem Rohrmantel des ersten Längsabschnittes je Reaktionszone, welcher sich im Bereich zwischen der Initiatordosierung und 20 bis 50% der Reaktionszonenlänge erstreckt, auf 180°C bis 210°C eingestellt wird und in dem jeweils darauf folgenden zweiten Längsabschnitt dieser Reaktionszone die Heißwasserausgangstemperatur aus dem Rohrmantel auf 140°C bis 180°C eingestellt wird. Bevorzugt sind Heißwasserausgangstemperaturen aus dem Rohrmantel von 190°C bis 210°C im ersten Längsabschnitt und von 150°C bis 180°C im jeweils darauf folgenden Längsabschnitt.

Bevorzugt ist der Heißwassermantel pro Reaktionszone in zwei unabhängig regelbare, getrennte Längsabschnitte unterteilt.

Als Reaktionszone gilt im folgenden jeweils die Zone beginnend mit einer Initiatorzudosierung bis vor die nächste Initiatorzudosierung. Sie enthält üblicherweise ein Temperaturmaximum, nach dessen Durchlaufen die Polymer/Monomermischung wieder kühler wird.

Erfindungsgemäss wurde gefunden, daß der Bereich zwischen der Initiatordosierung und 20 bis 50% der Reaktionszonenlänge nach der Initiatordosierung, besonders anfällig für Polymerablagerungen ist. Durch eine erhöhte Temperatur im Heißwassermantel in diesem Bereich werden diese Ablagerungen verhindert. Es ist zu vermuten, ohne dabei auf diese Theorie fixiert sein zu wollen, daß in diesem Bereich die Durchmischung des Initiators mit dem Polymerisationsstrom nicht schnell genug verläuft und so zu den Polymerbelägen führt. Bevozugt wird im Heißwassermantel zwischen der Initiatordosierung und 20 bis 40% der Reaktionszonenlänge, ganz besonders bevorzugt zwischen der Initiatordosierung und 20 bis 30% der Reaktionszonenlänge eine Heißwasserausgangstemperatur von 180°C bis 210°C, bevorzugt von 190°C bis 210°C eingestellt um die Polymerablagerungen verhindert. Die Heißwassereingangstemperatur liegt dabei üblicherweise zwischen 1°C bis 30°C, bevorzugt zwischen 2°C bis 20°C und besonders bevorzugt zwischen 2°C bis 10°C niedriger als die jeweilige Heißwasserausgangstemperatur.

Das erfindungsgemäße Verfahren läßt sich sowohl für die Homopolymerisation als auch für die Copolymerisation von Ethylen mit anderen Monomeren verwenden, unter der Voraussetzung, daß diese Monomeren unter Hochdruck mit Ethylen radikalisch copolymerisieren. Beispiele geeigneter copolymerisierbarer Monomere sind α, β-ethylenisch ungesättigte C₃- bis C₈-Carbonsäuren, insbesondere Maleinsäure, Fumarsäure, Itaconsäure, Acrylsäure, Methacrylsäure und Crotonsäure, α, β-ethylenisch ungesättigte C₄- bis C₁₅-Carbonsäureester oder -anhydride, insbesondere Methylmethacrylat, Ethylacrylat, n-Butylacrylat, Methacrylsäureanhydrid, Maleinsäureanhydrid und Itaconsäureanhydrid und α-Olefine, wie Propen, 1-Buten, 1-Penten oder 1-Hexen. Außerdem kann Vinylacetat als Comonomer verwendet werden. Der Anteil an Comonomer bzw. Comonomeren im Reaktionsgemisch beträgt vorzugsweise 1 bis 45 Gew.-%, besonders bevorzugt 5 bis 30 Gew.-%. Dabei wird der Rest des Reaktionsgemisches von Ethylen gebildet.

Die Polymerisation wird bei Drücken von 500 bis 5000 bar durchgeführt, wobei Drücke von 1500 und 4000 bar bevorzugt und Drücke von 2000 bis 3300 bar besonders bevorzugt sind. Die Reaktionstemperaturen liegen oberhalb 40°C. Hierbei ist es von Vorteil, wenn die Reaktionstemperaturen 120 bis 350°C, bevorzugt 150 bis 330°C betragen.

Bei dem erfindungsgemäßen Verfahren kann die Molmasse der darzustellenden Polymerisate wie üblich durch Zugabe von Molekulargewichtsreglern kontrolliert werden. Beispiele geeigneter Regler sind aliphatische und olefinische Kohlenwasserstoffe, wie z.B. Pentan, Hexan, Cyclohexan, Propen, Penten oder Hexen, Ketone, wie z.B. Aceton, Diäthylketon oder Diamylketon, Aldehyde, wie z.B. Formaldehyd oder Acetaldehyd und gesättigte aliphatische Alkohole, wie z.B. Methanol, Ethanol, Propanol oder Butanol. Besonders bevorzugt werden gesättigte aliphatische Aldehyde, insbesondere Propionaldehyd oder α-Olefine, wie Propen oder Hexen eingesetzt. Der Molekulargewichtsregler wird vorzugsweise dem Reaktionsgemisch vor dem Rohrreaktor zudosiert. Er kann auch zusammen mit dem Polymerisationsinitiator an den unterschiedlichen Stellen entlang des Rohrreaktors zudosiert werden.

Die Polymerisation wird in jeder Reaktionszone durch Zugabe von radikalisch zerfallenden Initiatoren gestartet. Als radikalische Polymerisationsinitiatoren können beliebige Radikalbildner eingesetzt werden. Es können radikalisch zerfallende, vorzugsweise organische Peroxide, Luft oder Sauerstoff eingesetzt werden.

Beispiele geeigneter Radikalbildner sind organische Peroxide, wie Perester, Perketal, Peroxyketone, und Percarbonate, wie z.B. Di-2-ethylhexylperoxydicarbonat, Dicyclohexyl-peroxydicarbonat, Diacetyl-peroxydicarbonat, Di-tert.-butylperoxid, Cumyl-perneodecanoat, tert.-Amyl-perpivalat, tert.-Butyl-perneodecanoat, tert.-Butyl-permaleinat, tert.-Butyl-perpivalat, tert.-Butylperisononanoat, Diisopropylbenzolhydroperoxid, Cumolhydroperoxid, tert.-Butyl-perbenzoat, Methyl-isobutylketonhydroperoxid, 2,2-Bis-(tert.-butylperoxy)-butan. Auch Azodicarbonsäureester, Azodicarbonsäuredinitrile, wie z.B. Azobisisobutyronitril sowie radikalisch zerfallende Kohlenwasserstoffe, welche auch als C-C-Starter bezeichnet werden, wie z.B. 1,2-Diphenyl-1,2-dimethylethan- und 1,1,2,2-Tetramethyl-ethan-Derivate, sind geeignet.

Die Initiatoren können einzeln oder als Gemisch in Konzentrationen von 0,5 bis 100 und insbesondere 0,5 bis 50 ppm, bezogen auf die Monomermenge, angewandt werden. Hierbei ist es von Vorteil, die Initiatoren im gelösten Zustand zu verwenden. Beispiele geeigneter Lösungsmittel sind aliphatische Kohlenwasserstoffe, insbesondere Octan und Isodecan.

Die gesamte Menge an Monomer und Comonomer kann in einem Schritt zudosiert werden. In einer bevorzugten Ausführungsform wird entlang des Rohrreaktors an mehreren Stellen, z.B. 2 bis 6 Stellen, besonders bevorzugt an 3 bis 5 Stellen Polymerisationsinitiator zudosiert, so daß z.B. 2 bis 6 Reaktionszonen entstehen, die alle die erfindungsgemäße Aufteilung des Heißwassermantels besitzen.

Bevorzugt ist der Heißwassermantel jeder Reaktionszone in zwei getrennte Längsabschnitte unterteilt. Die Erfindung umfaßt jedoch auch analoge Ausführungsformen, in denen der Heißwassermantel z.B. weiter unterteilt wird, aber das gleiche Temperaturprofil erzielt werden soll. Ebenso umfaßt die Erfindung auch solche Ausführungsformen, in denen die erfindungsgemäße Aufteilung des Heißwassermantels in die zwei bereiche mit verschiedenen Heißwasserausgangstemperaturen mit Reaktionszonen verküpft sind, in denen der Heißwassermantel nicht unterteilt ist, bzw. die keinen Heißwassermantel besitzen. Bevorzugt liegen die Reaktionszonen, welche nicht die erfindungsgemäße Aufteilung des Heißwassermantels enthalten am Ende des Reaktors, und sind besonders bevorzugt 1 bis 3 der Reaktionszonen mit dem erfindungsgemäß unterteilten Heißwassermantel nachgeschaltet.

Das Verhältnis von Länge zu Durchmesser des Rohrreaktors liegt vorzugsweise im Bereich von 10 000 bis 50 000, besonders bevorzugt von 15 000 bis 35 000.

Im allgemeinen liegt die mittlere Verweilzeit des Reaktionsgemisches im Rohrreaktor zwischen 30 und 300 Sekunden, bevorzugt zwischen 30 und 120 Sekunden.

Nach der letzten Zudosierung des Polymerisationsinitiators wird das Reaktionsgemisch abgekühlt, um das Produkt ohne thermische Schädigung aus dem Reaktor austragen zu können. Das Reaktionsgemisch wird durch ein geeignetes Hochdruckentspannungsventilsystem am Austrittsende des Röhrenreaktors ausgestoßen. Nach dem Austragen des Reaktionsgemischs wird das Polymerisat durch Entspannen von unverbrauchtem Ethylen und gegebenenfalls unverbrauchtem Comonomer getrennt, wonach man die Monomeren im allgemeinen in den Reaktor zurückführt.

Das erfindungsgemäße Verfahren kann in analoger Weise auch mit Vorschalten eines Reaktors mit Rückvermischung durchgeführt werden. Nach dem Abklingen der Polymerisation im Rückvermischer wird das Polymerisationsgemisch zusammen mit noch unverbrauchten Monomeren durch ein Hochdruckrohr, welches gegebenenfalls noch mit einem Wärmeaustauscher verbunden ist, in den Rohrreaktor eingebracht, wo das Verfahren, wie vorstehend beschrieben, weitergeführt wird. Im allgemeinen beträgt die mittlere Verweilzeit des Gemischs im Reaktor mit Rückvermischung 10 bis 100, insbesondere 10 bis 30 Sekunden, im Rohrreaktor 10 bis 200, insbesondere 10 bis 100 Sekunden.

In den bevorzugten Ausführungsformen wird zur Vermeidung der Polymerablagerungen, zusätzlich zu den erfindungsgemäßen Heißwasserausgangstemperaturen, in den Bereichen mit Heißwasseraustrittstemperaturen von 180°C bis 210°C eine höhere Strömungsgeschwindigkeit des Polymerisationsgemisches im Rohrreaktor eingestellt, als in den Bereichen mit Heißwasseraustrittstemperaturen von 140°C bis 180°C.

Demgemäß ist ein besonders bevorzugtes Verfahren dadurch gekennzeichnet, daß der Rohrreaktor mindestens zwei Reaktionszonen besitzt und man zusätzlich gekühltes oder vorgewärmtes Monomer und/oder gekühltes oder vorgewärmtes Comonomer als Frischgasstrom vor oder zu Beginn jeder Reaktionszone zudosiert (Mehrfachkaltgaseinspeisung). Durch die Zugabe von weiterem Monomer kann die Fließgeschwindigkeit erhöht und damit zusätzlich die Bildung von Belägen vermieden werden. Die Zudosierung des oder der Monomeren kann dabei vor der Neudosierung des Initiators oder zusammen mit dem Initiator erfolgen. Bevorzugt sind mindestens drei aufeinanderfolgende Reaktionszonen, wobei die Polymerisation in jeder Stufe durch Zugabe der entsprechenden Initiatoren wieder neu gestartet werden muß. Für die Durchführung eignen sich u.a. Rohrreaktoren, welche mit einer Reihe von Einlaßstellen für den Initiator sowie gegebenenfalls für die Zufuhr weiterer Monomermengen versehen sind. Im allgemeinen weist der Rohrreaktor ein Verhältnis von Länge zu Durchmesser von mindestens 10 000, vorzugsweise von mehr als 15 000, bei einer Länge von 120 bis 2500 m auf. Vorteilhafterweise ist der Rohrreaktor in gewundender Form angeordnet.

Ein anderes bevorzugtes Verfahren ist dadurch gekennzeichnet, daß jeweils der Rohrbereich mit Heißwasseraustrittstemperaturen aus dem Rohrmantel von 180°C bis 210°C einen kleineren Rohrinnendurchmesser besitzt, als der jeweils darauf folgende Rohrbereich mit Heißwasseraustrittstemperaturen aus dem Rohrmantel von 140°C bis 180°C. Solche Arten von Rohrreaktoren, jedoch ohne einen Heißwassermantel, sind beispielsweise in DE 2124011 C3 zur Vermeidung von Druckverlusten beschrieben. Auch durch diese Verringerung des Innendurchmessers wird die Fließgeschwindigkeit im ersten Bereich der einzelnen Reaktionszonen vergrößert. Diese Rohrreaktoren mit wechselnden Querschnitten können auch in Kombination mit der vorher beschriebenen Mehrfachkaltgaseinspeisung betrieben werden.

In einer besonders bevorzugten Ausführungsform besteht der Rohrreaktor mit den oben aufgeführten wechselnden Querschnitten aus 2 bis 6 Reaktionszonen, wobei die Rohrbereiche mit Heißwasseraustrittstemperaturen aus dem Rohrmantel von 180°C bis 210°C und dem kleineren Rohrinnendurchmesser alle den gleichen Rohrinnendurchmesser besitzen und die Rohrbereiche mit Heißwasseraustrittstemperaturen aus dem Rohrmantel von 140°C bis 180°C und dem größeren Rohrinnendurchmesser in Strömungsrichtung relativ zueinander einen abnehmenden Rohrinnendurchmesser besitzen. Man erhält so einen Reaktor in einer Art umgekehrter Teleskopform.

Ethylenhomo- und Ethylencopolymere zur Herstellung von Folien, Überzugsmaterialien und Photolacken sowie als Fließverbesserer in Erdölmitteldestillaten lassen sich mit dem erfindungsgemäßen Verfahren sicher und exakt reproduzierbar herstellen, ohne daß es in den Reaktoren zu einer thermischen Zersetzung der Monomere kommt. Die Polymerisate weisen Dichten von 915 bis 940 kg/m³ auf. Die Dichte kann z.B. über die Polymerisationstemperatur und den Polymerisationsdruck und/oder die Comonomerkonzentration beeinflußt werden. Ihr Schmelzflußindex gemäß DIN 53 735 liegt im Bereich von 0,2 bis 40 g/10 min, insbesondere ist er kleiner als 4 g/10 min. Folien, welche aus den Polymerisaten hergestellt werden, weisen hervorragende optische Eigenschaften auf. In der vorstehend beschriebenen Weise ist es möglich, Polymerisate mit Dichten über 925 kg/m³ bei Umsätzen von mehr als 25 % herzustellen.

### Verwendete Abkürzungen:

- T in: Gaseingangstemperatur
- DA: Druckabfall im Reaktor
- RZ: Reaktionszone
- Tw in: Kühlwassereingangstemperatur alle RZ
- Tw1: Kühlwasserausgangstemperatur RZ 1, 1.Abschnitt
- Tw2: Kühlwasserausgangstemperatur RZ 1, 2.Abschnitt
- Tw3: Kühlwasserausgangstemperatur RZ 2, 1.Abschnitt
- Tw4: Kühlwasserausgangstemperatur RZ 2, 2.Abschnitt
- Tw5: Kühlwasserausgangstemperatur RZ 3, 1.Abschnitt
- Tw6: Kühlwasserausgangstemperatur RZ 3, 2.Abschnitt
- PO: Peroxid
- Twin 1,3,5: Kühlwassereingangstemperatur RZ 1, 1.Abschnitt,
- u. RZ 2, 1.: Abschnitt u. RZ 3, 1.Abschnitt
- Twin 2,4,6: Kühlwassereingangstemperatur RZ 1, 2.Abschnitt,
- u. RZ 2, 2.: Abschnitt u. RZ 3, 2.Abschnitt
- T in 1: Gaseingangstemperatur RZ 1, 1.Abschnitt
- T in 3: Gaseingangstemperatur RZ 2, 1.Abschnitt
- T in 5: Gaseingangstemperatur RZ 3, 1.Abschnitt

Die in den Tabellen aufgeführten Produktparameter wurden nach folgenden Meßmethoden entwickelt:
Umsatz: Produktion[t/h]/Ethylendurchsatz[t/h]
Dichte: nach ISO 1183
MFI: Schmelzflußindex MFI (190°C/2,16) nach ISO 1133
Reißdehnung längs: aus Zugversuch nach DIN 53455

### Vergleichsbeispiel 1 und 2: S-Reaktor

Innendurchmesser 39 mm, Gasdurchsatz über den gesamten Reaktor 31 t/h. Initiierung erfolgt mit Peroxidinitiatorgemischen an drei Stellen entlang des Reaktors zu Beginn, nach 40% und 70% der Gesamtreaktorlänge) Die drei Reaktionszonen sind jeweils in zwei separate Kühlzonen unterteilt (1. Längsabschnitt je Reaktionszone: Initiatordosierung bis 40% der Reaktionszonenlänge, 2. Längsabschnitt: 40% bis Ende der Reaktionszone). Die Kühlwassereingangstemperatur ist in allen Reaktionszonen des Reaktors identisch. Die Polymerisationsbedingungen können Tabelle 1 entnommen werden.

Die Polymerisationen wurde in einem S-Reaktor durchgeführt. Als Molekularmassenregler diente Propionaldehyd. Die Initiatormischung bestehend aus bis zu drei organischen Peroxiden (tief-, mittel- und hochzerfallend) wurde in aliphatischer Lösung direkt in den Reaktor dosiert. Jede Einstellung wurde für etwa 24 Stunden gefahren, wobei jeweils die Produktdaten der letzte Charge in der Tabelle 1 aufgeführt sind.

### Beispiel 3 (erfindungsgemäß)

Der in den Vergleichsversuchen 1 und 2 beschriebene S-Reaktor wird nun mit unterschiedlichen Heißwasserausgangstemperaturen je Reaktionszone betrieben. Polymerisationsbedingungen und Produktdaten sind Tabelle 1 zu entnehmen. Es zeigt sich, daß eine verbesserte Produktqualität, ohne Abfall der Produktivität erhalten werden kann. Es werden kaum Polymerablagerungen beobachtet.

Die Durchführung der Reaktion bereitete keinerlei Schwierigkeiten und es kam auch nicht zu dthermischen Zersetzungen des Ethylens. Wegen seiner ausgezeichneten mechanischen und optischen Eigenschaften eignete sich das erfindungsgemäße Ethylenhomopolymerisat vorzüglich für die Herstellung von Schwergutverpackungen, Kleinhohlkorper für den medizinischen Bereich und Kaschierfolien.

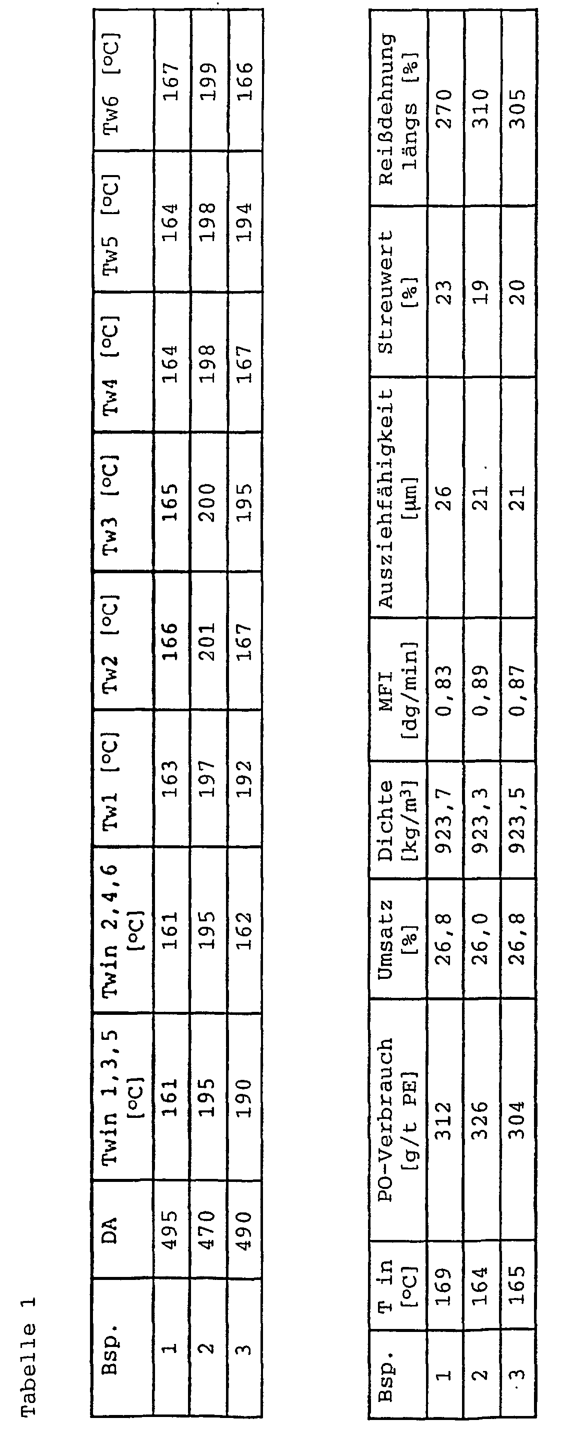

### Beispiele 4 bis 7: Versuche im S-Reaktor mit inverser Teleskopform in den Kühlbereichen

Der Innendurchmesser des Reaktors bleibt in den eigentlichen Reaktionszonen konstant, wird jedoch von Kühlzone zu Kühlzone vermindert. Der Gasdurchsatz beträgt über den gesamten Reaktor 31 t/h. In den Bereichen des Temperaturabfalls (d.h. den Kühlzonen) beträgt der Rohrinnendurchmesser 51 mm (in Reaktionszone 1), 45 mm (in Reaktionszone 2) bzw. gleichbleibend 39 mm (in Reaktionszone 3). Direkt vor den Initiator-Einspeisestellen wird der Rohrinnendurchmesser immer wieder auf 39 mm vermindert. (Abfolge: 39mm, 51 mm, 39 mm, 45 mm, 39 mm.)

Bereiche mit Temperaturanstieg und Temperaturabfall können unterschiedlich stark gekühlt werden (Wassertemperatur und Wasserdurchsatz). Tabelle 2 zeigt, daß durch Absenkung der Wassertemperatur in den Reaktorbereichen mit verminderter Strömungsgeschwindigkeit des Reaktionsmediums eine Produktionserhöhung um bis zu 10 % bei stabilen Polymerisationsbedingungen und hervorragender Produktqualität realisiert werden konnte.

Beispiele 4 bis 6 sind Vergleichbeispiele, Beispiel 7 ist erfindungsgemäß. Die Polymerisationsbedingungen und die Produktdaten können Tabelle 2 entnommen werden.

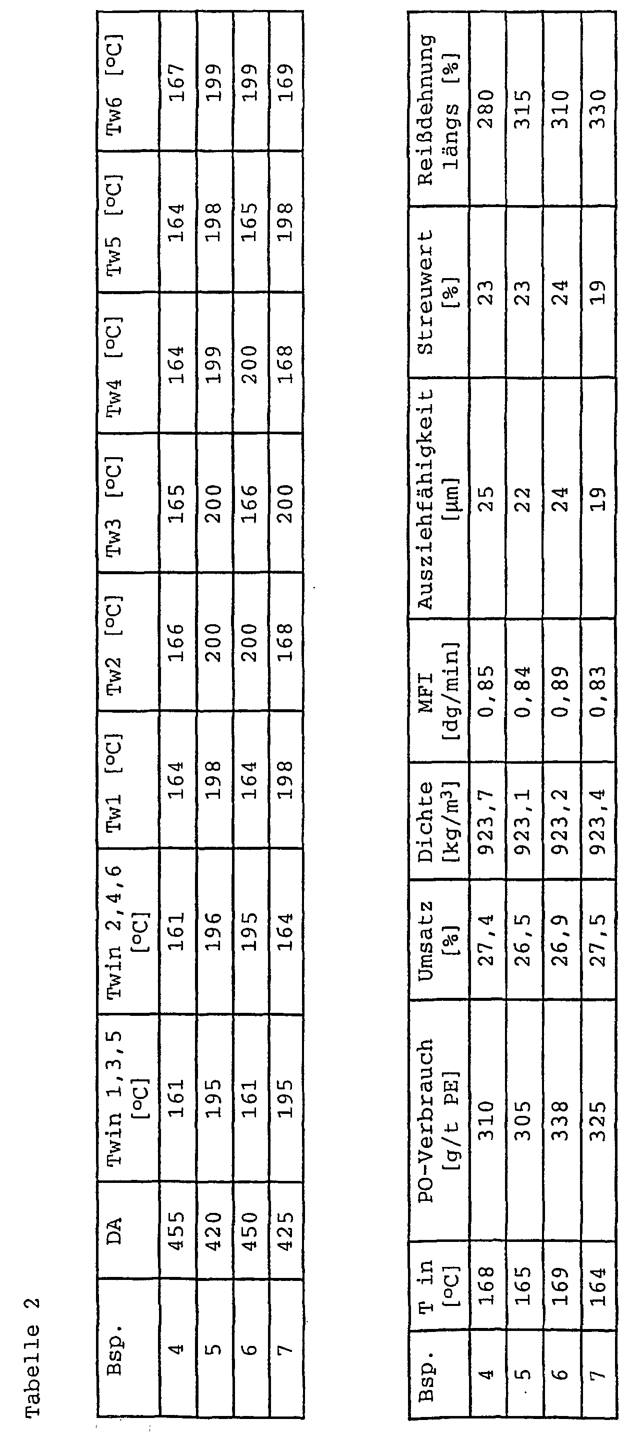

### Beispiele 8 bis 11: Versuche im MKE-Reaktor mit konstantem Innendurchmesser

Der Reaktor hat über seine gesamte Länge einen konstanten Innendurchmesser von 39 mm. Das Frischethylen wird nach dem Nachverdichter in drei Stränge aufgeteilt und an verschiedenen Stellen des Reaktors, direkt vor der nächsten Reaktionsinitiierung, zugeführt. Direkt nach Zuführung des Ethylens wird das Initiatorgemisch eingespeist um die Polymerisation zu starten. Die Massenflüsse in den Reaktionszonen betragen 15 t/h, 22 t/h und 31 t/h. Die Strömungsgeschwindigkeit des Reaktionsmediums erhöht sich dabei von einer zur nächsten Reaktionszone. Die gezielt niedrig gehaltenen Strömungsgeschwindigkeiten in RZ1 und RZ2 führten zur Verringerung des Druckabfalls und zur Produktivitätserhöhung.

Beispiele 8 bis 10 sind Vergleichbeispiele, Beispiel 11 ist erfindungsgemäß. Die Polymerisationsbedingungen und die Produktdaten können Tabelle 3 entnommen werden.

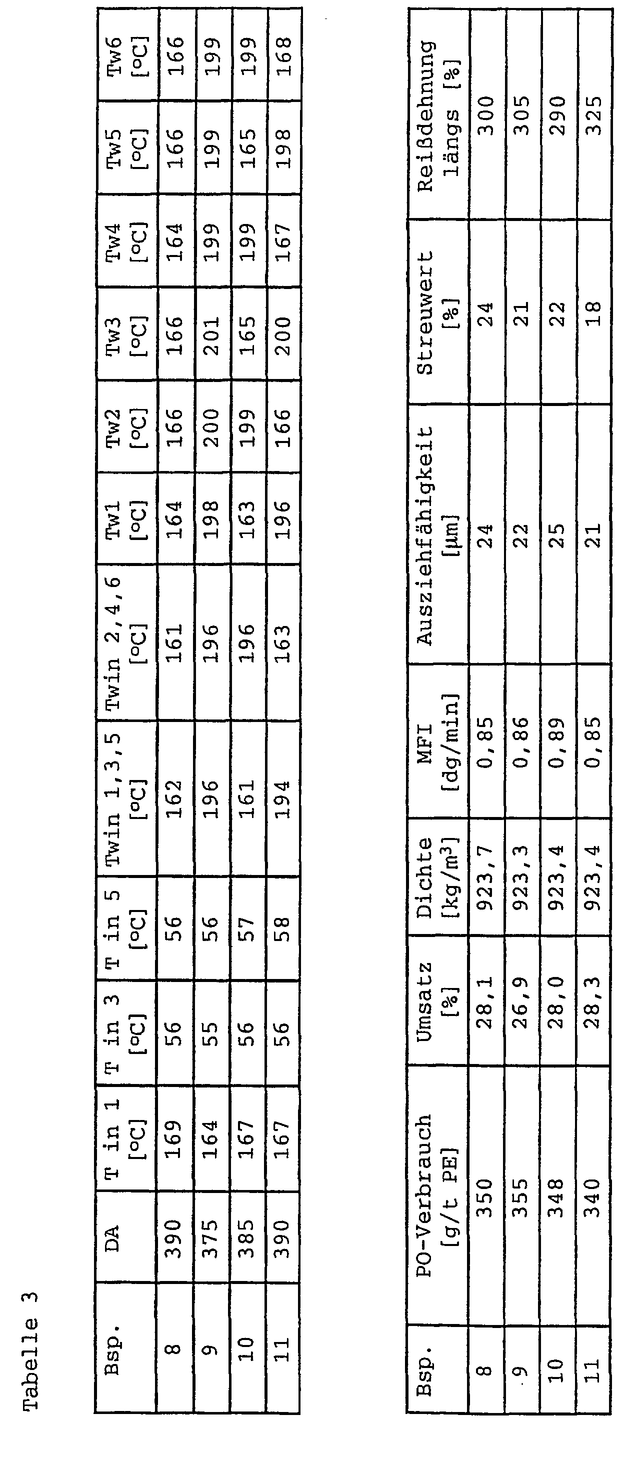

## Patentansprüche

1. Verfahren zur kontinuierlichen Herstellung von Ethylenhomound Ethylencopolymeren in Gegenwart von radikalischen Polymerisationsinitiatoren und gegebenenfalls Molekulargewichtsreglern in einem Rohrreaktor mit Heißwassermantel und ein oder mehreren Reaktionszonen bei Drücken im Bereich von 1000 bis 4000 bar und Temperaturen von 120°C bis 350°C, wobei der HeiBwassermantel jeder Reaktionszone in mindestens zwei unabhängig regelbare, getrennte Längsabschnitte geteilt ist, **dadurch gekennzeichnet, daß** die Heißwasserausgangstemperatur aus dem Rohrmantel des ersten Längsabschnittes je Reaktionszone, welcher sich im Bereich zwischen der Initiatordosierung und 20 bis 50% der Reaktionszonenlänge erstreckt, auf 180°C bis 210°C eingestellt wird und in dem jeweils darauf folgenden zweiten Längsabschnitt dieser Reaktionszone die Heißwasserausgangstemperatur aus dem Rohrmantel auf 140°C bis 180°C eingestellt wird.

2. Verfahren nach Anspruch 1, **dadurch gekennzeichnet, daß** entlang des Rohrreaktors an 2 bis 6 verschiedenen Stellen Polymerisationsinitiator zudosiert wird.

3. Verfahren nach Anspruch 1 oder 2, **dadurch gekennzeichnet, daß** der Rohrreaktor mindestens zwei Reaktionszonen besitzt und man zusätzliches gekühltes oder vorgewärmtes Monomer und/oder Comonomer als Frischgasstrom vor oder zu Beginn jeder Reaktionszone zudosiert.

4. Verfahren nach Anspruch 1 bis 3, **dadurch gekennzeichnet, daß** jeweils der Rohrbereich mit Heißwasseraustrittstemperaturen aus dem Rohrmantel von 180°C bis 210°C einen kleineren Rohrinnendurchmesser besitzt, als der jeweils darauf folgende Rohrbereich mit Heißwasseraustrittstemperaturen aus dem Rohrmantel von 140°C bis 180°C.

5. Verfahren nach Anspruch 4, **dadurch gekennzeichnet, daß** der Rohrreaktor aus 2 bis 6 Reaktionszonen besteht, wobei die Rohrbereiche mit Heißwasseraustrittstemperaturen aus dem Rohrmantel von 180°C bis 210°C und dem kleineren Rohrinnendurchmesser alle den gleichen Rohrinnendurchmesser besitzen und die Rohrbereiche mit Heißwasseraustrittstemperaturen aus dem Rohrmantel von 140°C bis 180°C und dem größeren Rohrinnendurchmesser in Strömungsrichtung relativ zueinander einen abnehmenden Rohrinnendurchmesser besitzen.

## Claims

1. A process for the continuous preparation of ethylene homopolymers and ethylene copolymers in the presence of free-radical polymerization initiators and in the presence or absence of molecular weight regulators in a tubular reactor having a hot water jacket and one or more reaction zones at pressures in the range from 1000 to 4000 bar and temperatures of from 120°C to 350°C, where the hot water jacket of each reaction zone is divided into at least two independently regulatable, separate longitudinal sections, wherein the hot water outlet temperature from the jacket of the first longitudinal section of each reaction zone, which extends over the region in between the initiator addition point and from 20 to 50% of the reaction zone length, is set to from 180°C to 210°C and the hot water outlet temperature from the jacket in the subsequent, second longitudinal section of this reaction zone is set to from 140°C to 180°C.

2. A process as claimed in claim 1, wherein polymerization initiator is metered in at from 2 to 6 different points along the tube reactor.

3. A process as claimed in claim 1 or 2, wherein the tube reactor has at least two reaction zones and additional cooled or preheated monomer and/or comonomer is introduced as a fresh gas stream upstream of or at the beginning of each reaction zone.

4. A process as claimed in any of claims 1 to 3, wherein the tube region having hot water outlet temperatures from the jacket of from 180°C to 210°C has in each case a smaller internal diameter than the subsequent tube region having hot water outlet temperatures from the jacket of from 140°C to 180°C.

5. A process as claimed in claim 4, wherein the tube reactor comprises from 2 to 6 reaction zones and the tube regions having hot water outlet temperatures from the jacket of from 180°C to 210°C and having the smaller internal diameter all have the same internal diameter and the tube regions having hot water outlet temperatures from the jacket of from 140°C to 180°C and the larger internal diameter have an internal diameter which decreases from region to region in the direction of flow.

## Revendications

1. Procédé pour la préparation en continu d'homopolymères d'éthylène et de copolymères d'éthylène en présence d'initiateurs de polymérisation radicalaires et éventuellement de régulateurs de masse moléculaire dans un réacteur tubulaire avec enveloppe d'eau chaude et une ou plusieurs zones de réaction à des pressions dans l'intervalle de 1000 à 4000 bar et des températures de 120° à 350°C, tandis que l'enveloppe d'eau chaude de chaque zone de réaction est divisée en au moins deux sections longitudinales séparées, réglables indépendamment, **caractérisé par le fait que** la température de sortie de l'eau chaude hors de l'enveloppe tubulaire de la première section longitudinale de chaque zone de réaction, qui s'étend dans l'intervalle entre l'introduction dosée d'initiateur et 20 à 50% de la longueur de la zone de réaction, est ajustée à 180°C à 210°C et, dans la deuxième section longitudinale de cette zone de réaction qui suit à chaque fois la première, la température de sortie de l'eau chaude hors de l'enveloppe tubulaire est ajustée à 140°C à 180°C.

2. Procédé selon la revendication 1, **caractérisé par le fait que** l'initiateur de polymérisation est ajouté en quantité dosée en 2 à 6 endroits différents le long du réacteur tubulaire.

3. Procédé selon la revendication 1 ou 2, **caractérisé par le fait que** le réacteur tubulaire possède au moins deux zones de réaction et que l'on ajoute en quantité dosée le monomère et/ou comonomère additionnel refroidi ou préchauffé, sous forme de courant de gaz frais, avant ou au début de chaque zone de réaction.

4. Procédé selon la revendication 1 à 3, **caractérisé par le fait qu'**à chaque fois l'intervalle de tube ayant des températures de sortie d'eau chaude hors de l'enveloppe tubulaire de 180°C à 210°C possède un plus petit diamètre intérieur de tube que l'intervalle de tube lui faisant suite, ayant des températures de sortie d'eau chaude hors de l'enveloppe tubulaire de 140°C à 180°C.

5. Procédé selon la revendication 4, **caractérisé par le fait que** le réacteur tubulaire consiste en 2 à 6 zones de réaction, tandis que les intervalles de tube ayant des températures de sortie d'eau chaude hors de l'enveloppe tubulaire de 180°C à 210°C et de plus petit diamètre intérieur de tube possèdent tous le même diamètre intérieur de tube que les intervalles de tube ayant des températures de sortie d'eau chaude hors de l'enveloppe tubulaire de 140°C à 180°C et de plus grand diamètre intérieur de tube possèdent un diamètre intérieur de tube diminuant l'un par rapport dans la direction de l'écoulement.
